# EUROPEAN PATENT SPECIFICATION

(11) **EP 2 636 915 B1**
(45) Date of publication and mention of the grant of the patent: **14.10.2020**
(21) Application number: 11838004.7
(22) Date of filing: 01.11.2011
(51) Int. Cl.: F16C 33/78, B60B 27/00, F16C 19/18

(54) **VEHICLE WHEEL BEARING DEVICE**
LAGERVORRICHTUNG FÜR FAHRZEUGRÄDER
DISPOSITIF DE ROULEMENT DE ROUE DE VÉHICULE

(30) Priority: 02.11.2010 JP 2010246057
(43) Date of publication of application: 11.09.2013
(73) Proprietor: NTN Corporation, Osaka-shi, Osaka 550-0003 (JP)
(72) Inventor: MORITA, Shunsuke, Iwata-shi Shizuoka 438-8510 (JP)
(74) Representative: Cohausz & Florack
(86) International application number: PCT/JP2011/075142
(87) International publication number: WO 2012/060354

(56) References cited:
- EP-A2- 2 236 869
- WO-A1-2010/113842
- JP-A- 2008 101 662
- JP-A- 2009 154 591
- JP-A- 2009 197 884
- JP-A- 2010 159 791
- JP-A- 2010 180 896
- JP-A- 2010 241 188
- JP-A- 2011 117 529
- JP-U- S61 134 404
- KR-A- 20020 061 052
- US-A1- 2010 129 018

## Description

### Field of the Invention

The present invention relates to a wheel bearing apparatus for a vehicle for rotatably supporting a wheel of vehicle such as an automobile, and more particularly to a wheel bearing apparatus for a vehicle intended to improve the sealability of a seal especially in a fitting portion of the wheel bearing apparatus.

### Description of Background Art

The wheel bearing apparatus for supporting a wheel of vehicle is that rotatably supports a hub wheel for mounting a wheel via a rolling bearing and there are those for a driving wheel and for a driven wheel. From reasons of structure an inner ring rotation type is used for the driving wheel and both inner ring rotation type and the outer ring rotation type are used for the driven wheel. In general, the wheel bearing apparatus is classified to a so-called first generation type in which the wheel bearing comprising double row angular ball bearings is fitted between a knuckle and a hub wheel, a second generation type in which a body mounting flange or a wheel mounting flange is directly formed on the outer circumference of an outer member, a third generation type in which one of inner raceway surfaces is directly formed on the outer circumference of a hub wheel, and a fourth generation type in which inner raceway surfaces are directly formed on the outer circumferences respectively of a hub wheel and an outer joint member of a constant velocity universal joint.

Since the wheel bearing apparatus is usually arranged at a position of vehicle liable to be splashed with muddy water etc., it has sealing means to seal a space between an outer member and an inner member of the wheel bearing apparatus. As a result of verifying damaged conditions of wheel bearing apparatus recovered from the market, it is found that the wheel bearing apparatus have been damaged at a high proportion due to causes of troubles in sealing apparatus rather than nature causes such as wear or peeling. Accordingly, it will be expected that the life of bearing apparatus could be increased by improving the sealability and durability of the sealing means.

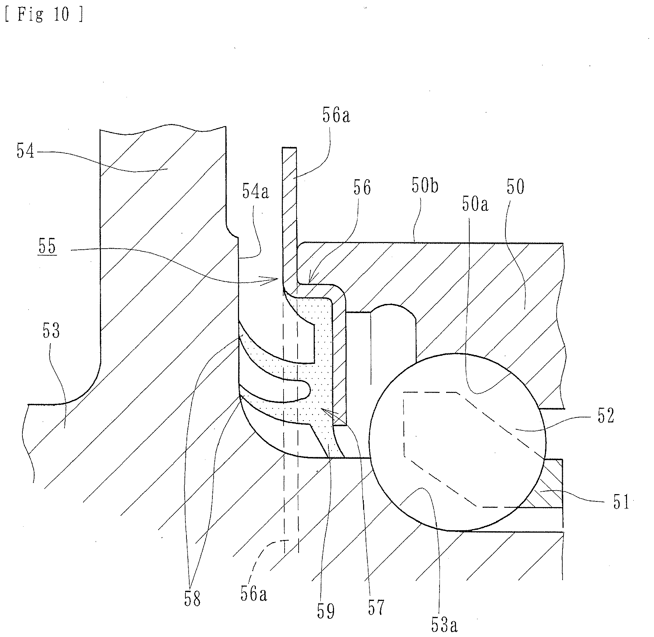

There have been proposed several sealing structures improved in their sealability and one representative example of a wheel bearing apparatus of the prior art equipped with such a sealing structure is shown in Fig. 10. This wheel bearing apparatus has an outer member 50 formed with double row outer raceway surfaces 50a, (50a) in its inner circumference and secured on a vehicle body via a knuckle. In addition, a hub wheel 53 and an outer joint member of a constant velocity universal joint (not shown) are rotatably mounted on the outer member 50 via double row balls 52, (52) held equidistantly along their inner and outer raceway surfaces.

An inner raceway surface 53a corresponding to one of the double row outer raceway surfaces 50a, (50a) is formed on an outer circumference of the hub wheel 53 and a wheel mounting flange 54 on which a brake disc and a wheel (not shown) are mounted is also formed on one end of the hub wheel 53.

A sealing structure 55 comprises an inner-side surface 54a of the wheel mounting flange 54, a core metal 56 fitted into the inner circumference of the outer member 50, and an elastic sealing member 57 secured on the core metal 56. The elastic sealing member 57 comprises two axial lip portions 58 axially contacted to the side surface 54a of the wheel mounting flange 54, and a radial lip portion 59 radially contacted to the outer circumference of the hub wheel 53.

In addition, the core metal 56 has a radially extending weir portion 56a adapted to be closely contacted to the outer-side end face of the outer member 50. This weir portion 56a is formed as having a circular arc-shaped (i.e. crescent-shaped) configuration and is arranged in an upper-half region of the wheel bearing apparatus.

Such a sealing structure 55 is possible to prevent muddy water from flowing toward the side surface 54a of the wheel mounting flange 54 due to presence of the weir portion 56a when muddy water splashes over the outer member 50 during running of a vehicle. Accordingly it is possible to prevent muddy water from remaining around the axial lip portions 58 and thus possible to maintain the sealability of the wheel bearing apparatus (see e.g. Patent Document 1 below).

Document WO 2010 113 842 A1 discloses a wheel bearing apparatus with a sealing structure in accordance with the preamble of claim 1.

### Patent Document of the Prior art

### Patent Document

Patent Document 1 : Japanese Laid-open Patent Publication No. 2003-49852

### Disclosure of the Invention

### Problems to be solved by the Invention

However, in such a sealing structure 55, it is necessary to set the gap between the core metal 56 and the side surface 54a of the wheel mounting flange 54 small in order to keep a desirable contact pressure of the axial lip portions 58 against the side surface 54a. This brings limitations in degree of freedom in design of the wheel bearing apparatus. In addition, since the weir portion 56a having a crescent shape is arranged only in an upper-half region of the wheel bearing apparatus, it is necessary to the weir portion 56a at an upper-half region of the wheel bearing apparatus when the core metal 56 is press-fitted into the outer member 50 during assembly of the wheel bearing apparatus. This increases assembling steps and time and thus the manufacturing cost. Furthermore, it is afraid that the weir portion 56a would be plastically deformed by impingement of pebbles etc. during running of a vehicle.

It is therefore an object of the present invention to provide a wheel bearing apparatus of which sealability in the seal and the fitting portion is improved.

### Means for solving the Problems

For achieving the object of the present invention, there is provided, according to the present invention of claim 1, a wheel bearing apparatus for a vehicle comprising an outer member formed on its outer circumference with a body mounting flange to be mounted on a knuckle and on its inner circumference with double row outer raceway surfaces; an inner member including a hub wheel and an inner ring, the hub wheel being formed on its one end with a wheel mounting flange and having a cylindrical portion axially extending from the wheel mounting flange, and the inner ring being press-fitted to the cylindrical portion of the hub wheel, the inner member being formed on its outer circumference with double row inner raceway surfaces opposing to the double row outer raceway surfaces; double row rolling elements freely rollably contained between the outer raceway surfaces of the outer member and the inner raceway surfaces of the inner member; and seals mounted within annular openings formed between the outer member and the inner member wherein the outer-side seal of the seals comprises a core metal and a sealing member; the core metal including a cylindrical portion press-fitted into the outer-side end inner circumference of the outer member, a radially inner portion bent and extending radially inward from the cylindrical portion, and a disc portion extending radially outward from the cylindrical portion and adapted to be closely contacted to the outer-side end face of the outer member; and the sealing member being integrally adhered via vulcanized adhesion to the radially inner portion of the core metal; wherein the sealing member comprises an integrally formed side lip inclined radially outward and adapted to be slidably contacted to the inner-side base portion of the wheel mounting flange via an axial interference, and a weir portion formed around the outer circumference of the disc portion of the core metal so as to cover the disc portion and be adhered thereto, the weir portion being formed so that it is projected radially outward from the outer circumference of the outer-side end of the outer member and elastically contacted thereto characterized in that the outer circumference of the outer-side end of the outer member is formed as a smooth and smaller diameter portion by a machining process to which the inner circumference of the weir portion of the sealing member is elastically contacted.

According to the wheel bearing apparatus for a vehicle of the present invention of claim 1, since the outer-side seal of the seals comprises a core metal and a sealing member; the core metal including a cylindrical portion press-fitted into the outer-side end inner circumference of the outer member, a radially inner portion extending radially inward from the cylindrical portion, and a disc portion extending radially outward from the cylindrical portion and adapted to be closely contacted to the outer-side end face of the outer member; and the sealing member being integrally adhered via vulcanized adhesion to the radially inner portion of the core metal; and the sealing member comprises an integrally formed side lip inclined radially outward and adapted to be slidably contacted to the inner-side base portion of the wheel mounting flange via an axial interference, and a weir portion formed around the outer circumference of the disc portion of the core metal so as to cover the disc portion and be adhered thereto, the weir portion being formed so that it is projected radially outward from the outer circumference of the outer-side end of the outer member and elastically contacted thereto, it is possible to prevent the core metal from being damaged by pebbles during running of a vehicle or by interfering of the weir portion with other parts of the wheel bearing apparatus during its assembly. In addition, it is possible to prevent rain water or muddy water from flowing into the space between the wheel mounting flange and the outer member via the outer circumference of the outer member during running of a vehicle. Accordingly, it is possible to provide a wheel bearing apparatus of which seal is improved in sealability as well as the sealability of the fitting portion is also improved.

According to the present invention of claim 1, it is further defined that the outer circumference of the outer-side end of the outer member is formed as a smooth and smaller diameter portion by a machining process to which the inner circumference of the weir portion of the sealing member is elastically contacted.

According to the present invention of claim 2, it is preferable that the weir portion of the sealing member is adhered to the core metal so that it covers the exposed surface of the core metal. This makes it possible to suppress generation of corrosion of the core metal. Thus, it is possible to use a cold rolled steel sheet which is low price and superior in workability and thus to achieve low manufacturing cost without using stainless steel sheet of high price for manufacturing the core metal.

According to the present invention of claim 3, it is preferable that a projected fitting surface of a predetermined width is formed on the inner circumference of the weir portion of the sealing member and an undercut portion is formed on one side or both sides of the fitting surface. The provision of the undercut portions enables elastic deformation of the fitting surface of the weir portion to be absorbed by the undercut portion and thus to set a larger interference of the weir portion. In addition, it is possible to further improve the sealability of the fitting surfaces between the weir portion and the outer member.

According to the present invention of claim 4, it is preferably defined that the outer circumference of the weir portions of the sealing member is formed with an inclined surface. This makes it possible to reduce amount of materials of the sealing member and also improve its moldability and thus to reduce the manufacturing cost.

According to the present invention of claim 5, it is preferably defined that a plurality of circumferential grooves are formed on the outer circumference of the weir portion of the sealing member. The provision of the circumferential grooves enables to discharge muddy water etc. overflowed the weir portion outside of the wheel bearing apparatus and to prevent the muddy water from direct flowing onto the side lips of the sealing member and thus to improve the sealability and durability of the wheel bearing apparatus.

According to the present invention of claim 6, it is preferably defined that the weir portion of the sealing member is opposed to the inner-side surface of the wheel mounting flange via a small axial gap to form a labyrinth seal therebetween. This makes it possible to prevent rain water or muddy water from entering onto the lip portions and thus to improve the sealability.

According to the present invention of claim 7, it is preferably defined that the sealing member further comprises an integrally formed dust lip inclined radially outward at a radially inner position from the side lip and an also integrally formed grease lip inclined toward the inner-side of the bearing and the base portion of the inner side of the wheel mounting flange is formed as having a curved surface, and that the side lip and the dust lip are slidably contacted to the base portion via a predetermined axial interference. This makes it possible to improve the sealing performance of the seal.

According to the present invention of claim 8, it is preferably defined that a tip end of the disc portion of the core metal is bent to form a bent edge portion. This enables to increase the strength and rigidity of the core metal and also increase the connection between the core metal and the sealing member.

According to the present invention of claim 9, it is also preferably defined that the inner-side base portion of the wheel mounting flange is formed as having a circular arc cross-section of a predetermined radius of curvature, that an annular metal member is fitted on the base portion, the annular metal member comprising a curved portion formed as having a circular arc cross-section corresponding to the shape of the base portion, a disc portion adapted to be closely contacted to the inner-side surface of the base portion, and a ceiling portion axially extending from the radially outermost portion of the disc portion toward a direction away from the wheel mounting flange, that a radius of curvature "r" of the base portion is smaller than or equal to a radius of curvature "R" of the curved portion of the annular metal member, and that the side lip and the dust lip are slidably contacted to the annular metal member via a predetermined axial interference and the grease lip is also slidably contacted to the annular metal member via a predetermined radial interference. This makes it possible to prevent generation of corrosion at sliding contact portion of lips and thus to keep a desirable sealability for a long term. In addition, it is possible to prevent the curved portion of the annular metal member from interfering with the circular-arc portion of the base portion of the wheel mounting flange and from being floated from the base portion. Accordingly, it is possible to keep close contact between the side surface of the base portion of the wheel mounting flange and the annular metal member and thus to keep stable sealability with suppressing variation of interference of side lips, dust lip, and grease lip.

According to the present invention of claim 10, it is preferably defined that the ceiling portion of the annular metal member is opposed to the weir portion of the sealing member via a small gap to form a labyrinth seal. This makes it possible to prevent muddy water from directly entering onto the side lips and also from entering into the wheel bearing apparatus via fitting portion between the side surface of the base portion and the annular metal member.

According to the present invention of claim 11, it is also preferably defined that the annular metal member is press-formed of steel sheet having corrosion resistance and being finished as having the surface roughness Ra of 0.2-0.6. This makes it possible to obtain superior sealing slide surface and thus to suppress wear of the lips and to keep the sealability of the seal for a long term if the wheel bearing would be used under a severe environment.

### Effects of the Invention

According to the wheel bearing apparatus for a vehicle of the present invention as defined in claim 1, it is possible to prevent the weir portion of the sealing member from interfering with other parts of the bearing apparatus during its assembly as well as the core metal from being damaged by pebbles during running of a vehicle. In addition, it is possible to prevent rain water or muddy water from flowing into the space between the wheel mounting flange and the outer member via the outer circumference of the outer member during running of a vehicle. Accordingly, it is possible to provide a wheel bearing apparatus of which sealability of the seal as well as the the fitting portions is also improved.

### Brief Description of the Drawings

[Fig.1] A longitudinal section view showing one preferable embodiment of the wheel bearing apparatus for a vehicle of the present invention;
[Fig.2] A partially enlarged view of a sealing portion of Fig.1;
[Fig.3] Partially enlarged view of one modification of Fig.2;
[Fig.4] Partially enlarged view of another modification of Fig.2;
[Fig.5] Partially enlarged view of one modification of Fig.4;
[Fig.6] Partially enlarged view of one modification of Fig.3;
[Fig.7] Partially enlarged view of one modification of Fig.6;
[Fig.8] Partially enlarged view of one modification of Fig.5;
[Figs.9(a)-(c)] Partially enlarged views of modifications of the weir portion of the sealing portion; and
[Fig.10] A partially enlarged view of a sealing structure of the prior art.

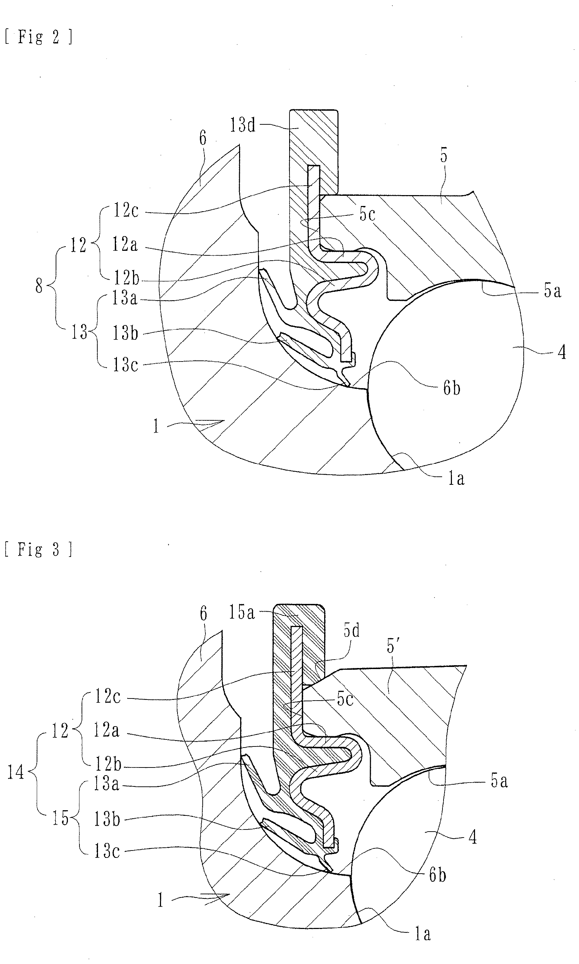

The modifications of the sealing portion depicted in figures 3, 6 and 7 are not in accordance with the invention defined in claim 1 but are retained for illustrative purposes.

### Embodiment

A preferred embodiment of the present invention will be hereinafter described with reference to the drawings.

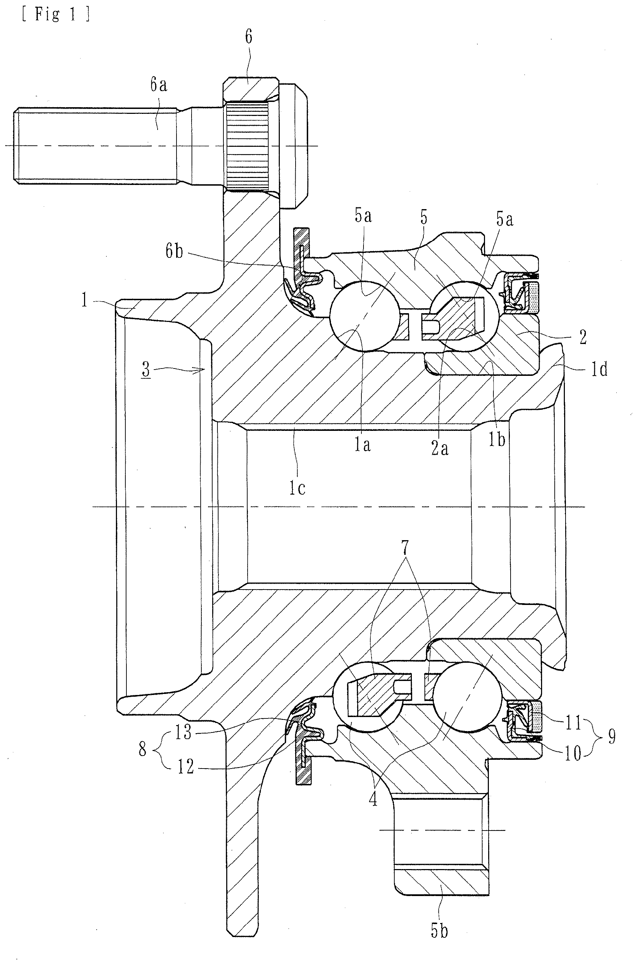

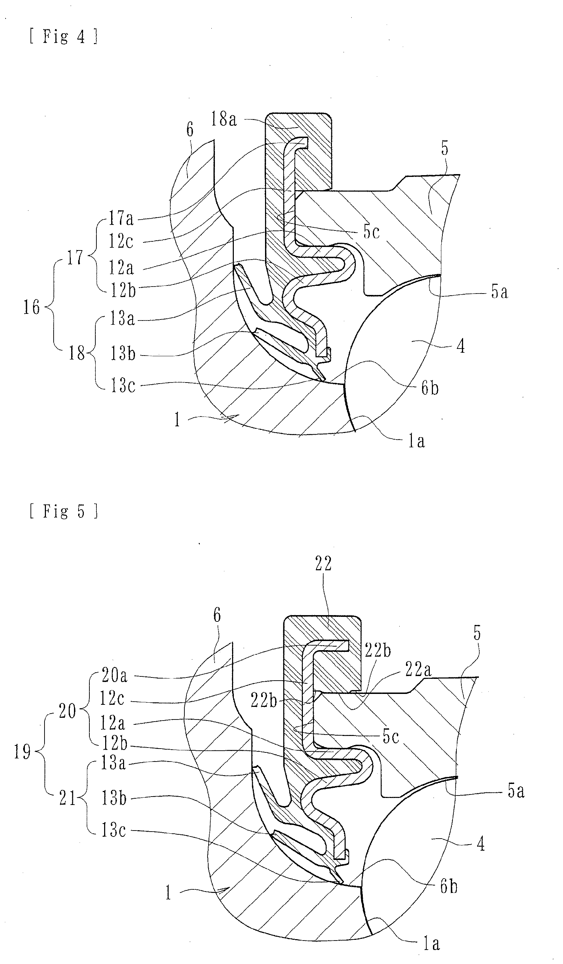

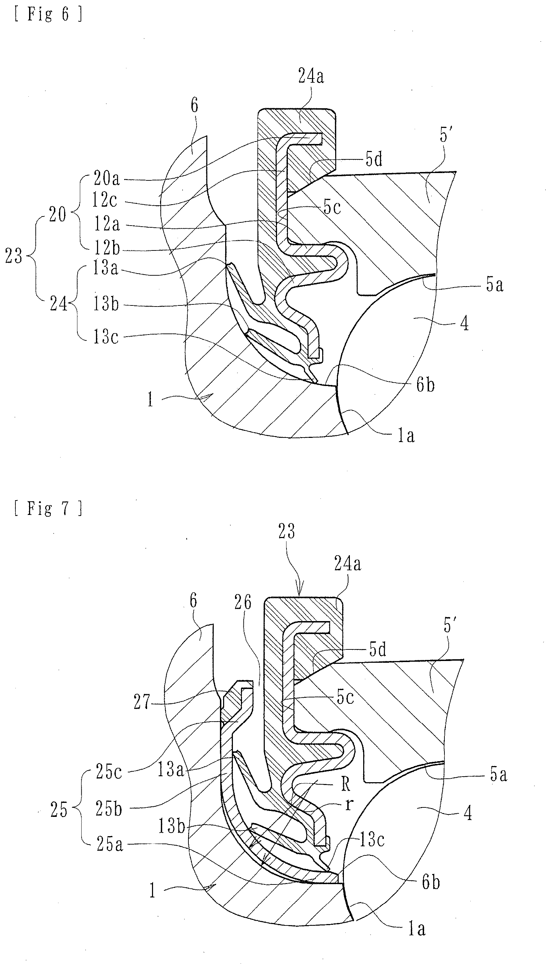

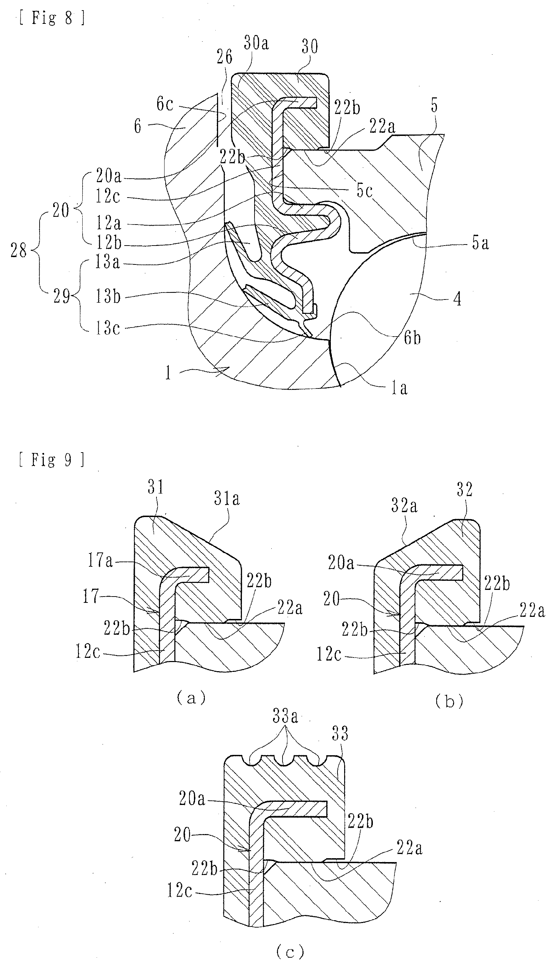

Fig.1 is a longitudinal section view showing one preferable embodiment of the wheel bearing apparatus for a vehicle of the present invention, Fig.2 is a partially enlarged view of a sealing portion of Fig.1, Fig.3 is a partially enlarged view of one modification of Fig.2, Fig.4 is a partially enlarged view of another modification of Fig.2, Fig.5 is a partially enlarged view of one modification of Fig.4, Fig.6 is a partially enlarged view of one modification of Fig.3, Fig.7 is a partially enlarged view of one modification of Fig.6, Fig.8 is a partially enlarged view of one modification of Fig.5, and Figs.9(a)-(c) are partially enlarged views of modifications of the weir portion of the sealing portion. In descriptions of this specification, a term "outer-side" defines a side which is positioned outside of a vehicle body (left-hand side of Fig.1) and a term "inner-side" defines a side which is positioned inside of a vehicle body (right-hand side of Fig.1) when the bearing apparatus is mounted on a vehicle.

This wheel bearing apparatus for a vehicle is a third generation type used for a driving wheel and comprises an inner member 3 including a hub wheel 1 and an inner ring 2 secured on the hub member 1, and an outer member 5 fitted onto the inner member 3 via double row rolling elements (balls) 4, 4.

The hub wheel 1 is integrally formed with a wheel mounting flange 6 at its one end, one (outer side) inner raceway surface 1a on its outer circumference, and a serration (or spline) 1c for torque transmission on its inner circumference and has a cylindrical portion 1b axially extending from the inner raceway surface 1a. Hub bolts 6a for securing a wheel are arranged on the wheel mounting flange 6 equidistantly along its periphery.

The inner ring 2 is formed on its outer circumference with the other (inner side) inner raceway surface 2a and press-fitted on the cylindrical portion 1b of the hub wheel 1 via a predetermined interference. The inner ring 2 is axially secured on the cylindrical portion 1b of the hub wheel 1 by a caulked portion 1d formed by plastically deforming the end of the cylindrical portion 1b under a predetermined pre-bearing pressure.

The hub wheel 1 is made of medium/high carbon steel including carbon of 0.40-0.80 % by weight and hardened by high frequency induction quenching so that a region from an inner-side base 6b of the wheel mounting flange 6 forming a seal land portion of the seal 8 to the cylindrical portion 1b including the inner raceway surface 1a is hardened as having surface hardness of HRC 58-64. The caulked portion 1d is not quenched and remained as its surface hardness after forging. On the other hand, the inner ring 2 and the rolling elements 4 are formed of high carbon chrome steel such as SUJ2 and hardened to their core by dipping quenching so as to have a surface hardness of HRC 58-64.

The outer member 5 is integrally formed on its outer circumference with a body mounting flange 5b to be mounted on a knuckle (not shown) forming part of the suspension apparatus of a vehicle and on its inner circumference with double row outer raceway surfaces 5a, 5a opposite to the inner raceway surfaces 1a, 2a of the inner member 3. Double row balls 4, 4 are contained between these outer raceway surfaces 5a, 5a and inner raceway surfaces 1a, 2a of the inner member 3 and rollably held by cages 7, 7.

The outer member 5 is made, similarly to the hub wheel 1, of medium/high carbon steel including carbon of 0.40-0.80%by weight and at least surfaces of the double row outer raceway surfaces 5a, 5a are hardened by high frequency induction quenching so as to have a surface hardness of HRC 58-64. Seals 8, 9 are mounted within annular openings formed between the outer member 5 and the inner member 3 to prevent leakage of grease contained in the bearing and infiltration of rainwater or dusts into the bearing from outside.

An inner-side seal 9 of seals 8, 9 is formed as a so-called pack seal comprising an annular sealing plate 10 press-fitted via a predetermined interference into the inner-side end inner circumference of the outer member 5 forming a stator member, and a slinger 11 press-fitted onto the outer circumference of the inner ring 2 forming a rotor member so as to be arranged oppositely to the sealing plate 10. The outer-side seal 8 is formed as an integrated seal comprising a core metal 12 press fitted into the outer-side end inner circumference of the outer member 5 via a predetermined interference, and a sealing member 13 integrally adhered to the core metal 12 via vulcanized adhesion.

As shown in the enlarged view of Fig.2, the core metal 12 is press-formed of a preserved cold rolled steel sheet (JIS SPCC etc.) etc. as having an annular configuration and comprises a cylindrical portion 12a press-fitted into the outer-side end inner circumference of the outer member 5 via a predetermined interference, a radially inner portion 12b extending radially inward from the cylindrical portion 12a, and a disc portion 12c extending radially outward from the cylindrical portion 12a and adapted to be closely contacted to the outer-side end face 5c of the outer member 5, all of which are integrally formed. The close contact of the disc portion 12c against the outer-side end face 5c of the outer member 5 enables to achieve accurate positioning of the seal 8 as well as to improve the sealability between the seal 8 and the outer member 8.

On the other hand, the sealing member 13 is formed of synthetic rubber such as NBR (acrylonitrile-butadiene rubber) and integrally adhered to the core metal 12 by vulcanized adhesion. As shown in the enlarged view of Fig. 2, the sealing member 13 comprises a side lip 13a inclined radially outward and adapted to be sliding contacted to the inner-side surface of the base portion 6b via a predetermined axial interference, a dust lip 13b also inclined radially outward at a radially inner position than the side lip 13a and adapted to be sliding contacted to the base portion 6b of a circular-arc configuration via a predetermined axial interference, and a grease lip 13c inclined radially inward and adapted to be sliding contacted to the base portion 6b via a predetermined radial interference.

Materials used for sealing member 13 other than NBR are e.g. HNBR (hydrogenated acrylonitrile-butadiene rubber), EPDM (ethylene propylene rubber) etc. having high heat resistance as well as ACM (polyacrylic rubber), FKM (fluorinated rubber) or silicone rubber having high heat resistance and chemical resistance.

Although it is shown here a wheel bearing apparatus of a double row angular contact ball bearing using balls as the rolling elements 4, it should be noted that the present invention is not limited to such a wheel bearing apparatus and can be applied to that formed of double row tapered roller bearing using tapered rollers as the rolling elements 4. In addition, although it is shown a third generation type wheel bearing apparatus for a driving wheel, the present invention can be applied to wheel bearing apparatus of the second generation type or fourth generation type.

According to this embodiment, the tip end of the disc portion 12c of the core metal 12 is formed so that it is projected from the outer circumference of the outer-side end of the outer member 5. The sealing member 13 is adhered to the core metal 12 so that it covers an exposed surface of the core metal 12 over a region from the radially inner portion 12b to the disc portion 12c to form a weir portion 13d. Such an arrangement of the sealing member 13 enables to avoid use of a high price steel sheet such as a stainless steel sheet for the core metal material 12 and to use a low price cold rolled steel sheet having high workability. Accordingly, it can reduce the manufacturing cost of the wheel bearing apparatus. In addition, it is possible to prevent the weir portion 13d from being damaged by pebbles during running of a vehicle or by interference of the weir portion 13d with other parts of the wheel bearing apparatus during its assembly which would be sometimes caused in a naked weir portion of the prior art metal. In addition, the outer circumference of the outer-side end of the outer member 5 is machined by turning etc. as having a smooth and smaller diameter portion and the inner circumference of the weir portion 13d is elastically contacted to the outer circumference of the outer member 5. Accordingly, it is possible to prevent rain water or muddy water from flowing into the space between the wheel mounting flange 6 and the outer member 5 via the outer circumference of the outer member 5 during running of a vehicle. Thus, it is possible to provide a wheel bearing apparatus having seal 8 with an excellent sealability for a long term as well as have a high sealability of the fitting portion.

Fig.3 shows a modification of the seal 8 of Fig.2. This seal 14 is different from the seal 8 only in the structure of sealing member and thus same reference numerals are used herein for designating the same parts and their detailed description will be omitted.

The seal 14 is an integrated seal comprising the core metal 12 press-fitted into the outer member 5' and a sealing member 15 adhered to the core metal 12. The sealing member 15 is formed of synthetic rubber such as NBR etc. and integrally adhered to the core metal 12 by vulcanized adhesion. Similarly to the sealing member 13 described above, this sealing member 15 comprises the side lip 13a inclined radially outward, the dust lip 13b also inclined radially outward at a radially inner position from the side lip 13a, and a grease lip 13c inclined toward the inner-side of the bearing.

The sealing member 15 is adhered to the core metal 12 so that it covers an exposed surface of the core metal 12 over a region from the radially inner portion 12b to the disc portion 12c to form a weir portion 15a. The inner circumference of the weir portion 15a is elastically contacted to the chamfered portion 5d of the outer member 5'. Thus, it is possible to prevent the weir portion 15a from being damaged by pebbles during running of a vehicle or by interfere of the weir portion with other parts of the wheel bearing apparatus during its assembly and also to obtain a stable contacting force and therefore the sealability between the chamfered portion 5d and the weir portion 15a. Thus, it is possible to provide a wheel bearing apparatus which does not require machining process for reducing the diameter of the outer circumference of the outer-side end of the outer member and thus can be manufacture at low cost.

Fig.4 is another modification of the seal 8 of Fig.2. This seal 16 is basically different from the seal 8 only in part of the structure of the sealing member and thus same reference numerals are used herein for designating the same parts and their detailed description will be omitted.

The seal 16 is an integrated seal comprising a core metal 17 press-fitted into the inner circumference of the outer-side end of the outer member 5 and a sealing member 18 adhered to the core metal 17. The core metal 17 is press-formed of cold rolled steel sheet as having an annular configuration and comprises a cylindrical portion 12a press-fitted into the inner circumference of the outer-side end of the outer member 5, a radially inner portion 12b bent and extending radially inward from the cylindrical portion 12a, a disc portion 12c extending radially outward from the cylindrical portion 12a and closely contacted to the outer-side end face 5c of the outer member 5, and a bent edge portion 17a formed by axially bending the tip end of the disc portion 12c, all of these portions of the core metal 17 being integrally formed. The provision of the bent edge portion 17a enables to increase the strength and rigidity of the core metal 17 and also increase the connection between the core metal 17 and the sealing member 18.

On the other hand, the sealing member 18 is formed of synthetic rubber such as NBR and integrally adhered to the core metal 17 by vulcanized adhesion. The sealing member 18 comprises a side lip 13a inclined radially outward, a dust lip 13b also inclined radially outward at a radially inner position than the side lip 13a, and a grease lip 13c inclined radially inward and forms a weir portion 18a covering an exposed surface of the core metal 17 over a region including the disc portion 12c of the core metal 17. This weir portion 18a has a width wider than those previously described and its inner circumference is contacted to the outer circumference of the outer-side end of the outer member 5. The provision of the weir portion 18a of wider width enables to further improve the sealability of the fitting portion between the weir portion 18a and the outer member 5.

Fig.5 is a modification of the seal 16 of Fig.4. This seal 19 is basically different from the seal 16 only in part of the structure of the sealing member and thus same reference numerals are used herein for designating the same parts and their detailed description will be omitted.

The seal 19 is an integrated seal comprising a core metal 20 press-fitted into the inner circumference of the outer-side end of the outer member 5 and a sealing member 21 adhered to the core metal 20. The core metal 20 is press-formed of cold rolled steel sheet as having an annular configuration and comprises the cylindrical portion 12a press-fitted into the inner circumference of the outer-side end of the outer member 5, the radially inner portion 12b bent and extending radially inward from the cylindrical portion 12a, the disc portion 12c extending radially outward from the cylindrical portion 12a and closely contacted to the outer-side end face 5c of the outer member 5, and a flange portion 20a formed by axially bending the tip end of the disc portion 12c, all of these portions of the core metal 20 being integrally formed. The provision of the flange portion 20a for disk portion 12c enables to increase the strength and rigidity of the core metal 20 and also increase the connection between the core metal 20 and the sealing member 21.

The sealing member 21 is formed of synthetic rubber such as NBR and integrally adhered to the core metal 20 by vulcanized adhesion and comprises the side lip 13a inclined radially outward, the dust lip 13b also inclined radially outward at a radially inner position than the side lip 13a, and the grease lip 13c inclined radially inward and a weir portion 22 covering an exposed surface of the core metal 20 over a region including the disc portion 12c of the core metal 20.

According to this modification, a fitting surface 22a of a predetermined width is formed on the inner circumference of the weir portion 22 of the sealing member 21 and undercut portions 22b are formed on both sides of the fitting surface 22a. The provision of the undercut portions 22b enables elastic deformation of the fitting surface 22a of the weir portion 22 to be absorbed by the undercut portions 22b and thus to set a large interference of the fitting surface 22a. Accordingly it is possible to further improve the sealability of the fitting surface 22a relative to the outer member.

Fig.6 is a modification of the seal 14 of Fig.3. This seal 23 is basically different from the seal 14 only in part of the structure of the weir portion and thus same reference numerals are used herein for designating the same parts and their detailed description will be omitted.

The seal 23 is an integrated seal comprising a core metal 20 press-fitted into the inner circumference of the outer-side end of the outer member 5' and a sealing member 24 adhered to the core metal 20. The sealing member 24 is formed of synthetic rubber such as NBR and integrally adhered to the core metal 20 by vulcanized adhesion and comprises the side lip 13a inclined radially outward, the dust lip 13b also inclined radially outward at a radially inner position than the side lip 13a, the grease lip 13c inclined radially inward, and a weir portion 24a extending from the root of the side lip 13a and covering a surface of the disc portion 12c of the core metal 20 and having a width larger than that of the weir portion 15a previously described. The weir portion 24a is elastically contacted to the chamfered portion 5d of the outer member 5' thus the sealability between the weir portion 24a and the outer member 5' can be further improved.

Fig.7 is a modification of the seal 23 of Fig.6. This seal 23 itself is same as that of Fig. 6 without provision of an annular metal member 25 onto which the seal 23 is slidably contacted and thus same reference numerals are used herein for designating the same parts and their detailed description will be omitted.

According to this modification, the side lip 13a, the dust lip 13b and the grease lip 13c are slidably contacted to the annular metal member 25 fitted on the base portion 6b of the wheel mounting flange 6. The annular metal member 25 is press-formed of steel sheet having corrosion resistance such as austenitic-stainless steel sheet or preserved cold rolled steel sheet and comprises a curved portion 25a formed as having a circular arc cross-section corresponding to the curved surface of the base portion 6b, a disc portion 25b adapted to be closely contacted to the inner-side surface of the base portion 6b, and a ceiling portion 25c axially extending from the radially outermost portion of the disc portion 25b toward a direction away from the wheel mounting flange 6.

The ceiling portion 25c of the annular metal member 25 is opposed to the seal 23 i.e. weir portion 24a of the sealing member 24 via a small gap to form a labyrinth seal 26 and a sealing member 27 is integrally adhered to the ceiling portion 25c via vulcanized adhesion. The sealing member 27 comprises synthetic rubber such as NRB etc. and is adapted to elastically contacted to the inner-side surface of the base portion 6b. This makes it possible to prevent muddy water from directly entering onto the side lips 13a and also from entering into the wheel bearing apparatus via fitting portion between the side surface of the base portion 6b and the annular metal member 25.

The annular metal member 25 enables to prevent generation of corrosion at the lip sliding surface. In addition, since the annular metal member has the surface roughness Ra of 0.2-0.6, it is possible to obtain superior sealing slide surface and thus to suppress wear of the lips and to keep the sealability of the seal for a long term if the wheel bearing would be used under a severe environment. In this case, "Ra" is one of the geometric parameters of JIS (JIS B0601-2001) and means the arithmetic average of the roughness, i.e. the average of absolute value deviations from the average line.

The base portion 6b is formed as having a surface of circular arc-shaped cross-section of a predetermined radius of curvature "r" and the curved portion 25a of the annular metal member 25 is formed as having a circular arc cross-section of a predetermined radius of curvature "R" (R≥r). This makes it possible to prevent the annular metal member 25 from floating from the circular arc surface of the base portion 6b due to interference of the curved portion 25a of the annular metal member 25 with the circular arc surface of the base portion 6b when the annular metal member 25 is fitted onto the base portion 6b. Accordingly, it is possible to prevent generation of a gap between the side surface of the base portion 6b and the disc portion 25b of the annular metal member 25 and to keep the stable sealability with suppressing variation of interference of the side lip 13a, dust lip 13b and grease lip 13c.

Fig.8 is a modification of the seal 19 of Fig.5. This seal 19 is basically different from the seal 14 only in part of the structure of the weir portion and thus same reference numerals are used herein for designating the same parts and their detailed description will be omitted.

The seal 28 is an integrated seal comprising the core metal 20 press-fitted into the inner circumference of the outer-side end of the outer member 5 and a sealing member 29 adhered to the core metal 20. The sealing member 29 is formed of synthetic rubber such as NBR and integrally adhered to the core metal 20 by vulcanized adhesion and comprises the side lip 13a inclined radially outward, the dust lip 13b also inclined radially outward at a radially inner position than the side lip 13a, the grease lip 13c inclined radially inward, and a weir portion 30 integrally formed so that it covers a surface of the disc portion 12c of the core metal 20.

According to this modification, the fitting surface 22a of a predetermined width is formed on the inner circumference of a weir portion 30 of a sealing member 29 and undercut portions 22b are formed on both sides of the fitting surface 22a. In addition, the weir portion 30 is formed with an overhang portion 30a projecting toward the wheel mounting flange 6 so that the overhang portion 30a is opposed to the inner-side surface 6c of the wheel mounting flange 6 via a small axial gap therebetween to form the labyrinth seal 26. This makes it possible to further improve the sealability of the fitting portion between the seal 28 and the outer member 5 and thus to prevent muddy water from directly entering onto the side lips 13a as well as to improve the sealability and durability of the seal 28.

Figs.9 (a)-(c) show modifications of the weir portion of the sealing member. These modifications are different from embodiments previously described only in configuration of the outer circumference of the weir portion and thus same reference numerals are used herein for designating the same parts and their detailed description will be omitted.

A weir portion 31 shown in Fig.9(a) is formed on its inner circumference with the fitting surface 22a of a predetermined width and undercut portions 22b are formed on both sides of the fitting surface 22a. In addition, the weir portion 31 is formed on its outer circumference with an inclined surface 31a of a gradually reducing diameter toward the inner-side of the bearing. A weir portion 32 shown in Fig.9(b) is formed on its inner circumference with the fitting surface 22a of a predetermined width and undercut portions 22b are formed on both sides of the fitting surface 22a. In addition, the weir portion 32 is also formed on its outer circumference with an inclined surface 32a of a gradually reducing diameter toward the outer-side of the bearing. The provision of the inclined surfaces 31a, 32a of weir portions 31, 32 enables achievement of reduction of material and manufacturing cost and improvement of moldability.

A weir portion 33 shown in Fig.9(c) is formed on its inner circumference with the fitting surface 22a of a predetermined width and undercut portions 22b are formed on both sides of the fitting surface 22a. In addition, the weir portion 33 is also formed on its outer circumference with a plurality of circumferential grooves 33a. The provision of circumferential grooves 33a enables to discharge muddy water etc. overflowed via the outer surface of the outer member to the outside and thus to improve the sealability and the durability of the seal by preventing direct entering of muddy water onto the side lip 13a.

The present invention has been described with reference to the preferred embodiment and its modifications. Obviously, modifications and alternations will occur to those of ordinary skill in the art upon reading and understanding the preceding detailed description. It is intended that the present invention be construed as including all such alternations and modifications insofar as they come within the scope of the appended claims.

### Applicability in Industries

The present invention can be applied to wheel bearing apparatus of the second, third and fourth generation type in which seals are arranged in annular openings between an inner member forming a rotor-side member and an outer member forming a stator-side member.

### Explanation of Reference numerals and Characters

- 1: hub wheel
- 1a, 2a: inner raceway surface
- 1b: cylindrical portion
- 1c: serration
- 2: inner ring
- 3: inner member
- 4: ball
- 5, 5': outer member
- 5a: outer raceway surface
- 5b: body mounting flange
- 5c: outer-side end face of outer member
- 5d: chamfered surface of outer member
- 6: wheel mounting flange
- 6a: hub bolt
- 6b: inner-side base of wheel mounting flange
- 6c: inner-side side surface of wheel mounting flange
- 7: cage
- 8, 14, 16, 19, 23, 28: outer-side seal
- 9: inner side seal
- 10: sealing plate
- 11: slinger
- 12, 17, 20: core metal
- 12a: cylindrical portion
- 12b: radially inner portion
- 12c: disc portion
- 13, 15, 18, 21, 24, 27, 29: sealing member
- 13a: side lip
- 13b: dust lip
- 13c: grease lip
- 13d, 15a, 18a, 2, 24a, 30, 31, 32, 33: weir portion
- 17a: bent edge portion
- 20a: flange portion
- 22a: fitting portion
- 22b: undercut portion
- 25: annular metal member
- 25a: curved portion
- 25b: disc portion
- 25c: ceiling portion
- 26: labyrinth seal
- 30a: overhang portion
- 31a, 32a: inclined portion
- 33a: circumferential groove
- 50: outer member
- 50a: outer raceway surface
- 50b: outer circumference
- 51: cage
- 52: ball
- 53: hub wheel
- 53a: inner raceway surface
- 54: wheel mounting flange
- 54a: side surface of wheel mounting flange
- 55: seal structure
- 56: core metal
- 56a: weir portion
- 57: elastic sealing member
- 58: axial lip portion
- 59: radial lip portion
- r: radius of curvature of base portion
- R: radius of curvature of curved portion of annular metal member

## Claims

1. A wheel bearing apparatus for a vehicle comprising:
an outer member (5) formed on its outer circumference with a body mounting flange (5b) to be mounted on a knuckle and on its inner circumference with double row outer raceway surfaces (5a, 5a);
an inner member (3) including a hub wheel (1) and an inner ring (2), the hub wheel (1) being formed on its one end with a wheel mounting flange (6) for mounting a wheel and having a cylindrical portion (1b) axially extending from the wheel mounting flange (6), and the inner ring (2) being press-fitted to the cylindrical portion (1b) of the hub wheel (1), the inner member (3) being formed on its outer circumference with double row inner raceway surfaces (1a, 2a) opposing to the double row outer raceway surfaces (5a, 5a);
double row rolling elements (4, 4) freely rollably contained between the outer raceway surfaces (5a, 5a) of the outer member (5) and the inner raceway
surfaces (1a, 2a) of the inner member (3); and
seals (8, 9) mounted within annular openings formed between the outer member (5) and the inner member (3);
wherein the outer-side seal (8) of the seals (8, 9) comprises a core metal (12, 17, 20) and a sealing member (13, 18, 21, 29); the core metal (12, 17, 20) including a cylindrical portion (12a) press-fitted into the outer-side end inner circumference of the outer member (5) a radially inner portion (12b) bent
and extending radially inward from the cylindrical portion (12a), and a disc portion (12c) extending radially outward from the cylindrical portion (12a) and adapted to be closely contacted to the outer-side end face (5c) of the outer member (5);
and the sealing member (13, 18, 21, 29) being integrally adhered via vulcanized adhesion to the radially inner portion (12b) of the core metal (12, 17, 20);
wherein the sealing member (13, 18, 21, 29) comprises an integrally formed side lip (13a) inclined radially outward and adapted to be slidably contacted to the inner-side base portion (6b) of the wheel mounting flange (6) via an axial interference, and a weir portion (13d, 18a, 22, 30, 31, 32, 33) formed around the outer circumference of the disc portion (12c) of the core metal (12, 17, 20) so as to cover the disc portion (12c) and be adhered thereto, the weir portion (13d, 18a, 22, 30, 31, 32, 33) being formed so that it is projected radially outward from the outer circumference of the outer-side end of the outer member (5, 5') and elastically contacted thereto **characterized in:**
**that** the outer circumference of the outer-side end of the outer member (5, 5') is formed as a smooth and smaller diameter portion by a machining process to which the inner circumference of the weir portion (13d, 18a, 22, 30, 31, 32, 33) of the sealing member (13, 18, 21, 29) is elastically contacted.

2. A wheel bearing apparatus for a vehicle of claim 1 wherein the weir portion (13d, 18a, 22, 30, 31, 32, 33) of the sealing member (13, 18, 21, 29) is adhered to the core metal (12, 17, 20) so that it covers the exposed surface of the core metal (12, 17, 20).

3. A wheel bearing apparatus for a vehicle of claim 1 or 2 wherein a projected fitting surface (22a) of a predetermined width is formed on the inner circumference of the weir portion (22, 30, 31, 32, 33) of the sealing member (21, 29) and an undercut portion (22b) is formed on one side or both sides of the fitting surface (22a).

4. A wheel bearing apparatus for a vehicle of any one of claims 1-3 wherein the outer circumference of the weir portions (31, 32) of the sealing member is formed with an inclined surface (31a, 32a).

5. A wheel bearing apparatus for a vehicle of any one of claims 1-3 wherein a plurality of circumferential grooves (33a) are formed on the outer circumference of the weir portion (33) of the sealing member.

6. A wheel bearing apparatus for a vehicle of anyone of claims 1-5 wherein the weir portion (30) of the sealing member (29) is opposed to the inner-side surface (6c) of the wheel mounting flange (6) via a small axial gap to form a labyrinth seal (26) therebetween.

7. A wheel bearing apparatus for a vehicle of any one of claims 1-6 wherein the sealing member (13, 18, 21, 29) further comprises an integrally formed dust lip (13b) inclined radially outward at a radially inner position from the side lip (13a) and an also integrally formed grease lip (13c) inclined toward the inner-side of the bearing and the base portion (6b) of the inner side of the wheel mounting flange is formed as having a curved surface of a circular arc cross section, and wherein the side lip (13a) and the dust lip (13b) are slidably contacted to the base portion (6b) via a predetermined axial interference.

8. A wheel bearing apparatus for a vehicle of anyone of claims 1-7 wherein a tip end of the disc portion (12c) of the core metal (17, 20) is bent to form a bent edge portion (17a, 20a).

9. A wheel bearing apparatus for a vehicle of anyone of claims 1-8 wherein the inner-side base portion (6b) of the wheel mounting flange (6) is formed as having a circular arc cross-section of a predetermined radius of curvature, wherein an annular metal member (25) is fitted on the base portion (6b), the annular metal member (25) comprising a curved portion (25a) formed as having a circular arc cross-section corresponding to the shape of the base portion (6b), a disc portion (25b) adapted to be closely contacted to the inner-side surface of the base portion (6b) and extending radially outwardly from the curved portion (25a), and a ceiling portion (25c) axially extending from the radially outermost portion of the disc portion (25b) toward a direction away from the wheel mounting flange (6), wherein a radius of curvature "r" of the base portion (6b) is smaller than or equal to a radius of curvature "R" of the curved portion (25a) of the annular metal member (25), and wherein the side lip (13a) and the dust lip (13b) are slidably contacted to the annular metal member (25) via a predetermined axial interference and the grease lip (13c) is also slidably contacted to the annular metal member (25) via a predetermined radial interference.

10. A wheel bearing apparatus for a vehicle of claim 9 wherein the ceiling portion (25c) of the annular metal member (25) is opposed to the weir portion (24a) of the sealing member (24) via a small gap to form a labyrinth seal (26).

11. A wheel bearing apparatus for a vehicle of claim 9 or 10 wherein the annular metal member (25) is press-formed of steel sheet having corrosion resistance and being finished as having the surface roughness Ra of 0.2-0.6.

## Patentansprüche

1. Radlagervorrichtung für ein Fahrzeug, die Folgendes umfasst:
ein äußeres Element (5), das an seinem Außenumfang mit einem Karosseriemontageflansch (5b) zur Montage an einem Gelenk und an seinem Innenumfang mit zweireihigen äußeren Laufbahnflächen (5a, 5a) ausgebildet ist;
ein inneres Element (3) mit einer Radnabe (1) und einem Innenring (2), wobei die Radnabe (1) an ihrem einem Ende mit einem Radmontageflansch (6) zur Montage eines Rades ausgebildet ist und einen zylindrischen Abschnitt (16) aufweist, der sich axial vom Radmontageflansch (6) erstreckt, und wobei der Innenring (2) auf den zylindrischen Abschnitt (16) der Radnabe (1) pressgepasst ist, wobei das innere Element (3) an seinem Außenumfang mit zweireihigen inneren Laufbahnflächen (1a, 2a) ausgebildet ist, die den zweireihigen äußeren Laufbahnflächen (5a, 5a) gegenüberliegen;
zweireihige Wälzkörper (4, 4), die frei rollbar zwischen den äußeren Laufbahnflächen (5a, 5a) des äußeren Elements (5) und den inneren Laufbahnflächen (1a, 2a) des inneren Elements (3) enthalten sind; und
Dichtungen (8, 9), die in ringförmigen Öffnungen montiert sind, die zwischen dem äußeren Element (5) und dem inneren Element (3) ausgebildet sind;
wobei die außenseitige Dichtung (8) der Dichtungen (8, 9) ein Kernmetall (12, 17, 20) und ein Dichtungselement (13, 18, 21, 29) umfasst; wobei das Kernmetall (12, 17, 20) einen zylindrischen Abschnitt (12a), der in den Innenumfang des außenseitigen Endes des äußeren Elements (5) pressgepasst ist, einen radial inneren Abschnitt (12b), der gebogen ist und sich vom zylindrischen Abschnitt (12a) radial nach innen erstreckt, und einen Scheibenabschnitt (12c) aufweist, der sich vom zylindrischen Abschnitt (12a) radial nach außen erstreckt und so ausgelegt ist, dass er mit der außenseitigen Endfläche (5c) des äußeren Elements (5) in engen Kontakt kommt; und wobei das Dichtungselement (13, 18, 21, 29) in einem Stück über vulkanisierte Haftung an den radial inneren Abschnitt (12b) des Kernmetalls (12, 17, 20) geklebt ist;
wobei das Dichtungselement (13, 18, 21, 29) eine in einem Stück ausgebildete Seitenlippe (13a), die radial nach außen geneigt und so ausgelegt ist, dass sie mit dem innenseitigen Basisabschnitt (6b) des Radmontageflansches (6) über eine axiale Überlagerung in Gleitkontakt kommt, und einen Wehrabschnitt (13d, 18a, 22, 30, 31, 32, 33) aufweist, der um den Außenumfang des Scheibenabschnitts (12c) des Kernmetalls (12, 17, 20) ausgebildet ist, um so den Scheibenabschnitt (12c) zu bedecken und daran geklebt zu werden, wobei der Wehrabschnitt (13d, 18a, 22, 30, 31, 32, 33) so ausgebildet ist, dass er vom Außenumfang des außenseitigen Endes des äußeren Elements (5, 5') radial nach außen vorsteht und elastisch damit in Kontakt kommt, **dadurch gekennzeichnet, dass**:
der Außenumfang des außenseitigen Endes des äußeren Elements (5, 5') mit einem Bearbeitungsverfahren als ein glatter Abschnitt mit kleinerem Durchmesser ausgebildet ist, mit dem der innere Umfang des Wehrabschnitt (13d, 18a, 22, 30, 31, 32, 33) des Dichtungselements (13, 18, 21, 29) elastisch in Kontakt kommt.

2. Radlagervorrichtung für ein Fahrzeug nach Anspruch 1, bei der der Wehrabschnitt (13d, 18a, 22, 30, 31, 32, 33) des Dichtungselements (13, 18, 21, 29) an das Kernmetall (12, 17, 20) geklebt wird, so dass es die freiliegende Oberfläche des Kernmetalls (12, 17, 20) bedeckt.

3. Radlagervorrichtung für ein Fahrzeug nach Anspruch 1 oder 2, bei der eine vorstehende Passfläche (22a) einer vorbestimmten Breite am Innenumfang des Wehrabschnitts (22, 30, 31, 32, 33) des Dichtungselements (21, 29) ausgebildet ist und ein hinterschnittener Abschnitt (22b) auf einer Seite oder auf beiden Seiten der Passfläche (22a) ausgebildet ist.

4. Radlagervorrichtung für ein Fahrzeug nach einem der Ansprüche 1 bis 3, bei der der Außenumfang der Wehrabschnitte (31, 32) des Dichtungselements mit einer geneigten Fläche (31a, 32a) ausgebildet ist.

5. Radlagervorrichtung für ein Fahrzeug nach einem der Ansprüche 1 bis 3, bei der eine Vielzahl von Umfangsnuten (33a) auf dem Außenumfang des Wehrabschnitts (33) des Dichtungselements ausgebildet ist.

6. Radlagervorrichtung für ein Fahrzeug nach einem der Ansprüche 1 bis 5, wobei der Wehrabschnitt (30) des Dichtungselements (29) der Innenseitenfläche (6c) des Radmontageflansches (6) über einen kleinen axialen Spalt gegenüberliegt, um dazwischen eine Labyrinthdichtung (26) auszubilden.

7. Radlagervorrichtung für ein Fahrzeug nach einem der Ansprüche 1 bis 6, wobei das Dichtungselement (13, 18, 21, 29) ferner eine in einem Stück ausgebildete Staublippe (13b), die an einer radial inneren Position von der Seitenlippe (13a) radial nach außen geneigt ist, und eine ebenfalls in einem Stück ausgebildete Fettlippe (13c) aufweist, die zur Innenseite des Lagers hin geneigt ist, und der Basisabschnitt (6b) der Innenseite des Radmontageflanschs so ausgebildet ist, dass er eine gekrümmte Oberfläche mit einem kreisbogenförmigen Querschnitt aufweist, und wobei die Seitenlippe (13a) und die Staublippe (13b) mit dem Basisabschnitt (6b) über eine vorbestimmte axiale Überlagerung in Gleitkontakt kommen.

8. Radlagervorrichtung für ein Fahrzeug nach einem der Ansprüche 1 bis 7, wobei ein Spitzenende des Scheibenabschnitts (12c) des Kernmetalls (17, 20) gebogen ist, um einen gebogenen Randabschnitt (17a, 20a) zu bilden.

9. Radlagervorrichtung für ein Fahrzeug nach einem der Ansprüche 1 bis 8, wobei der innenseitige Basisabschnitt (6b) des Radmontageflanschs (6) so ausgebildet ist, dass er einen kreisbogenförmigen Querschnitt mit einem vorbestimmten Krümmungsradius hat, wobei ein ringförmiges Metallelement (25) auf den Basisabschnitt (6b) gepasst ist, wobei das ringförmige Metallelement (25) einen gekrümmten Abschnitt (25a), der so ausgebildet ist, dass er einen kreisbogenförmigen Querschnitt entsprechend der Form des Basisabschnitts (6b) aufweist, einen Scheibenabschnitt (25b), der so ausgelegt ist, dass er mit der Innenseitenfläche des Basisabschnitts (6b) in engen Kontakt kommt und sich von dem gekrümmten Abschnitt (25a) radial nach außen erstreckt, und einen Deckenabschnitt (25c) aufweist, der sich axial vom radial äußersten Abschnitt des Scheibenabschnitts (25b) in eine Richtung weg von dem Radmontageflansch (6) erstreckt, wobei ein Krümmungsradius "r" des Basisabschnitts (6b) genauso groß wie oder kleiner als ein Krümmungsradius "R" des gekrümmten Abschnitts (25a) des ringförmigen Metallelements (25) ist und wobei die Seitenlippe (13a) und die Staublippe (13b) mit dem ringförmigen Metallelement (25) über eine vorbestimmte axiale Überlagerung in Gleitkontakt kommen und die Fettlippe (13c) ebenfalls mit dem ringförmigen Metallelement (25) über eine vorbestimmte radiale Überlagerung in Gleitkontakt kommt.

10. Radlagervorrichtung für ein Fahrzeug nach Anspruch 9, wobei der Deckenabschnitt (25c) des ringförmigen Metallelements (25) dem Wehrabschnitt (24a) des Dichtungselements (24) über einen kleinen Spalt gegenüberliegt, um eine Labyrinthdichtung (26) auszubilden.

11. Radlagervorrichtung für ein Fahrzeug nach Anspruch 9 oder 10, bei der das ringförmige Metallelement (25) aus Stahlblech mit Korrosionsbeständigkeit pressgeformt und so bearbeitet ist, dass es eine Oberflächenrauigkeit Ra von 0,2 - 0,6 hat.

## Revendications

1. Appareil de roulement de roues pour véhicule comprenant :
un élément externe (5) formé sur sa circonférence externe avec une bride de montage de corps (5b) à monter sur une articulation et sur sa circonférence interne avec des surfaces de circuit externe à double rangée (5a, 5a) ;
un élément interne (3) comprenant une roue de moyeu (1) et un anneau interne (2), la roue de moyeu (1) étant formée sur sa une extrémité avec une bride de montage de roue (6) pour monter une roue et ayant une section cylindrique (1b) s'étendant axialement à partir de la bride de montage de roue (6), et l'anneau interne (2) étant ajusté sous presse à la section cylindrique (1b) du moyeu de roue (1), l'élément interne (3) étant formé sur sa circonférence externe avec les surfaces de circuit à double rangée (1a, 2a) s'opposant aux surfaces de circuit externe à double rangée (5a, 5a) ;
des éléments de roulement à double rangée (4, 4) que l'on peut faire rouler librement contenus entre les surfaces de circuit externe (5a, 5a) de l'élément externe (5) et les surfaces de circuit interne (1a, 2a) de l'élément interne (3) ; et
des joints d'étanchéité (8, 9) montés dans les ouvertures annulaires formées entre l'élément externe (5) et l'élément interne (3) ;
le joint d'étanchéité de côté externe (8) des joints d'étanchéité (8, 9) comprenant un métal de cœur (12, 17, 20) et un élément de scellement (13, 18, 21, 29) ; le métal de cœur (12, 17, 20) comprenant une section cylindrique (12a) ajustée sous presse dans la circonférence interne de l'extrémité de côté externe de l'élément externe (5), une section radialement interne (12b) courbée et s'étendant radialement vers l'intérieur de la section cylindrique (12a), et une section de disque (12c) s'étendant radialement vers l'extérieur de la section cylindrique (12a) et adaptée pour être étroitement en contact avec la face d'extrémité externe (5c) de l'élément externe (5) ; et l'élément de scellement (13, 18, 21, 29) étant collé de manière intégrée via l'adhésion vulcanisée à la section radialement interne (12b) du métal de cœur (12, 17, 20) ;
l'élément de scellement (13, 18, 21, 29) comprenant une lèvre de côté formée de manière intégrée (13a) inclinée radialement vers l'extérieur et adaptée pour être en contact de manière coulissable avec la section de base de côté interne (6b) de la bride de montage de roue (6) via une interférence axiale, et une section de déversoir (13d, 18a, 22, 30, 31, 32, 33) formée autour de la circonférence externe de la section de disque (12c) du métal de cœur (12, 17, 20) de manière à recouvrir la section de disque (12c) et d'y être collée, la section de déversoir (13d, 18a, 22, 30, 31, 32, 33) étant formée de manière à être projetée radialement vers l'extérieur de la circonférence externe de l'extrémité de côté externe de l'élément externe (5, 5') et mise en contact élastiquement à celle-ci **caractérisé en ce :**
**que** la circonférence externe de l'extrémité de côté externe de l'élément externe (5, 5') est formée comme une section lisse et de diamètre plus petit par un processus d'usinage à laquelle la circonférence interne de la section de déversoir (13d, 18a, 22, 30, 31, 32, 33) de l'élément de scellement (13, 18, 21, 29) est élastiquement mise en contact.

2. Appareil de roulement de roues pour véhicule selon la revendication 1 dans lequel la section de déversoir (13d, 18a, 22, 30, 31, 32, 33) de l'élément de scellement (13, 18, 21, 29) est collée au métal de cœur (12, 17, 20) de sorte qu'elle recouvre la surface exposée du métal de cœur (12, 17, 20).

3. Appareil de roulement de roues pour véhicule selon la revendication 1 ou 2 dans lequel une surface d'ajustement projetée (22a) d'une largeur prédéterminée est formée sur la circonférence interne de la section de déversoir (22, 30, 31, 32, 33) de l'élément de scellement (21, 29) et une section sous-coupée (22b) est formée sur un côté ou les deux côtés de la surface d'ajustement (22a).

4. Appareil de roulement de roues pour véhicule selon l'une quelconque des revendications 1 à 3 dans lequel la circonférence externe des sections de déversoir (31, 32) de l'élément de scellement est formée avec une surface inclinée (31a, 32a).

5. Appareil de roulement de roues pour véhicule selon l'une quelconque des revendications 1 à 3 dans lequel une pluralité de sillons circonférentiels (33a) sont formés sur la circonférence externe de la section de déversoir (33) de l'élément de scellement.

6. Appareil de roulement de roues pour véhicule selon l'une quelconque des revendications 1 à 5 dans lequel la section de déversoir (30) de l'élément de scellement (29) est opposée à la surface de côté interne (6c) de la bride de montage de roue (6) via un espace libre axial pour former un joint d'étanchéité de labyrinthe entre elles.

7. Appareil de roulement de roues pour véhicule selon l'une quelconque des revendications 1 à 6 dans lequel l'élément de scellement (13, 18, 21, 29) comprend en outre une lèvre anti-poussière formée de manière intégrée (13b) radialement vers l'extérieur à une position radialement interne de la lèvre de côté (13a) et aussi une lèvre graissée formée de manière intégrée (13c) inclinée vers le côté interne du roulement et la section de base (6b) du côté interne de la bride de montage de roue est formée comme ayant une surface incurvée d'une section transversale à arc circulaire, et la lèvre de côté (13a) et la lèvre anti-poussière (13b) étant en contact de manière coulissable avec la section de base (6b) via une interférence axiale prédéterminée.

8. Appareil de roulement de roues pour véhicule selon l'une quelconque des revendications 1 à 7 dans lequel une extrémité de pointe de la section de disque (12c) du métal de cœur (17, 20) est courbée pour former une section de bord courbée (17a, 20a).

9. Appareil de roulement de roues pour véhicule selon l'une quelconque des revendications 1 à 8 dans lequel la section de base de côté interne (6b) de la bride de montage de roue (6) est formée comme ayant une section transversale à arc circulaire d'un rayon de courbure prédéterminé, un élément métallique annulaire (25) étant ajusté sur la section de base (6b), l'élément métallique annulaire (25) comprenant une section incurvée (25a) formée comme ayant une section transversale à arc circulaire correspondant à la forme de la section de base (6b), une section de disque (25b) adaptée pour être en contact étroit avec la surface de côté interne de la section de base (6b) et s'étendant radialement vers l'extérieur de la section incurvée (25a), et une section de plafond (25c) s'étendant axialement de la section radialement la plus externe de la section de disque (25b) vers une direction à l'écart de la bride de montage de roue (6), un rayon de courbure « r » de la section de base (6b) étant inférieur ou égal à un rayon de courbure « R » de la section incurvée (25a) de l'élément métallique annulaire (25), et la lèvre de côté (13a) et la lèvre anti-poussière (13b) étant en contact de manière coulissable avec l'élément métallique annulaire (25) via une interférence axiale prédéterminée et la lèvre graissée (13c) étant aussi en contact de manière coulissable avec l'élément métallique annulaire (25) via une interférence axiale prédéterminée.

10. Appareil de roulement de roues pour véhicule selon la revendication 9 dans lequel la section de plafond (25c) de l'élément métallique annulaire (25) est opposée à la section de déversoir (24a) de l'élément de scellement (24) via un petit espace libre pour former un joint d'étanchéité de labyrinthe (26).

11. Appareil de roulement de roues pour véhicule selon la revendication 9 ou 10 dans lequel l'élément métallique annulaire (25) est formé sous presse d'une feuille d'acier ayant une résistance à la corrosion et étant finie comme ayant la dureté de surface Ra de 0,2 à 0,6.
Abstract
